(19) Europäisches Patentamt
European Patent Office
Office européen des brevets

(11) **EP 4 636 931 A1**

(12) **EUROPEAN PATENT APPLICATION**

(43) Date of publication:
**22.10.2025 Bulletin 2025/43**

(21) Application number: **25170616.4**

(22) Date of filing: **15.04.2025**

(51) International Patent Classification (IPC):
***H01M 50/451*** *(2021.01)* ***H01M 50/42*** *(2021.01)*
***H01M 50/446*** *(2021.01)* ***H01M 50/449*** *(2021.01)*
***H01M 50/489*** *(2021.01)* ***H01M 50/417*** *(2021.01)*
***H01M 50/434*** *(2021.01)* ***H01M 50/443*** *(2021.01)*

(52) Cooperative Patent Classification (CPC):
**H01M 50/42; H01M 50/417; H01M 50/434; H01M 50/443; H01M 50/446; H01M 50/451; H01M 50/489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.04.2024 KR 20240049785**

(71) Applicant: **SAMSUNG SDI CO., LTD.**
**Yongin-si, Gyeonggi-do 17084 (KR)**

(72) Inventors:
- **Kim, Soo Hee**
  **16678 Suwon-si, Gyeonggi-do (KR)**
- **Ko, Chang Hong**
  **16678 Suwon-si, Gyeonggi-do (KR)**
- **Seo, Jin Weon**
  **16678 Suwon-si, Gyeonggi-do (KR)**
- **Lee, Eon Mi**
  **16678 Suwon-si, Gyeonggi-do (KR)**
- **Park, Sam Jin**
  **16678 Suwon-si, Gyeonggi-do (KR)**
- **Lee, Min Jeong**
  **16678 Suwon-si, Gyeonggi-do (KR)**
- **Han, Yoo Bin**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) SEPARATOR FOR RECHARGEABLE LITHIUM BATTERY AND RECHARGEABLE LITHIUM BATTERY INCLUDING THE SAME

(57) Examples present disclosure relate to a separator for a rechargeable lithium battery, and a rechargeable lithium battery including the separator, and include a separator for a rechargeable lithium battery including a porous substrate, and a coating layer located on at least one surface of the porous substrate. The coating layer includes a cross-linked product of a binder, a cross-linking agent, and carboxyalkyl cellulose or a salt thereof, and a filler. The binder includes a (meth)acryl-based binder including a structural unit derived from (meth) acrylate or (meth)acrylic acid, a cyano group-containing structural unit, and a sulfonate group-containing structural unit. The cross-linking agent includes one or more of an aziridinebased cross-linking agent and a carbodiimide-based cross-linking agent.



Processed by Luminess, 75001 PARIS (FR)

## Description

BACKGROUND

### 1. Field of the disclosure

The present disclosure relates to a separator for a rechargeable lithium battery, and a rechargeable lithium battery including the separator.

### 2. Discussion of Related Art

With increasing presence of electronic devices using batteries, such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery is a battery that typically includes a positive electrode and a negative electrode that contain an active material capable of the intercalation and deintercalation of lithium ions, and that produces electrical energy by oxidation and reduction reactions when the lithium ions are intercalated into and deintercalated from the positive electrode and the negative electrode.

The rechargeable lithium battery may further include a separator between the positive electrode and the negative electrode. The separator may have a low membrane resistance and a high heat resistance, which result in low heat shrinkage.

SUMMARY

The invention is defined by the appended claims. The description that follows is subjected to this limitation. Any disclosure lying outside the scope of said claims is only intended for illustrative as well as comparative purposes.

One example embodiment includes a separator for a rechargeable lithium battery, which increases the stability of the battery by having a low dry shrinkage rate and a low shrinkage rate in an electrolyte.

Another example embodiment includes a rechargeable lithium battery including the separator for a rechargeable lithium battery.

An example embodiment includes:

1.a separator for a lithium secondary battery, which includes a porous substrate and a coating layer located on at least one surface of the porous substrate, wherein the coating layer includes a cross-linked product of a binder, a cross-linking agent, and carboxyalkyl cellulose or a salt thereof and a filler, the binder includes a (meth)acryl-based binder including a structural unit derived from (meth)acrylate or (meth)acrylic acid, a cyano group-containing structural unit, and a sulfonate group-containing structural unit, and the cross-linking agent includes one or more of an aziridine-based cross-linking agent and a carbodiimide-based cross-linking agent.

2. In 1, the coating layer is formed of a composition including the (meth)acryl-based binder, the cross-linking agent, the carboxyalkyl cellulose or a salt thereof, and the filler.

3. In 1-2, the carboxyalkyl cellulose or a salt thereof includes carboxymethyl cellulose or a salt thereof.

4. In 1-3, the carboxyalkyl cellulose or a salt thereof is included in an amount ranging from 20 wt% to 70 wt% of a total of the (meth)acryl-based binder, the cross-linking agent, and the carboxyalkyl cellulose or a salt thereof.

5. In 1-4, the aziridine-based cross-linking agent includes one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

6. In 1-5, the carbodiimide-based cross-linking agent includes one or more of a monocarbodiimide-based compound and a polycarbodiimide-based compound.

7. In 1-6, the filler includes a filler having a particle diameter D100 of 1.0 μm or less.

8. In 1-7, the filler is substantially spherical, substantially plate-shaped, substantially cubic, or amorphous.

9. In 1-8, the (meth)acryl-based binder and the filler are included in a mass ratio of 1:10 to 1:50.

10. In 1-9, among a total of the (meth)acryl-based binder, the cross-linking binder, and the carboxyalkyl cellulose or a salt thereof, the (meth)acryl-based binder is included in an amount ranging from 25 wt% to 75 wt%, the cross-linking agent is included in an amount ranging from 5 wt% to 30 wt%, and the carboxyalkyl cellulose or a salt thereof is included in an amount ranging from 20 wt% to 70 wt%.

11. In 1-10, the structural unit derived from (meth)acrylate or (meth)acrylic acid is represented by at least one of

Chemical Formula 1, 2, 3 below, or a combination thereof:

Chemical Formula 1:

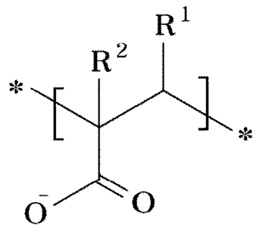

Chemical Formula 2:

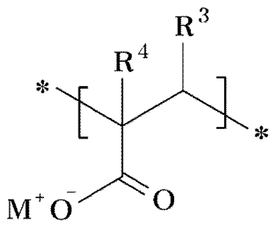

Chemical Formula 3:

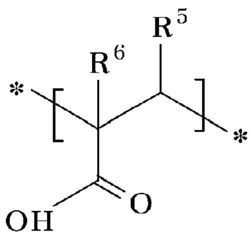

In Chemical Formulas 1 to 3,

$R^1$ to $R^6$ each independently is hydrogen or a methyl group, and
in Chemical Formula 2,
M is an alkali metal,
the cyano group-containing structural unit is represented by Chemical Formula 4 below:

Chemical Formula 4:

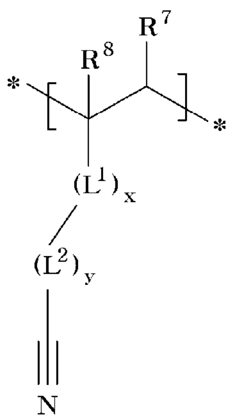

In Chemical Formula 4,

$R^7$ and $R^8$ each independently is hydrogen or a C1 to C3 alkyl group,
$L^1$ is -C(=O)-, -C(=O)O-, -OC(=O)-, -O-, or -C(=O)NH-,
x is an integer ranging from 0 to 2,
$L^2$ is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
y is an integer ranging from 0 to 2, and
the sulfonate group-containing structural unit is represented by at least one of Chemical Formula 5, 6, 7 below, or a combination thereof:

Chemical Formula 5:

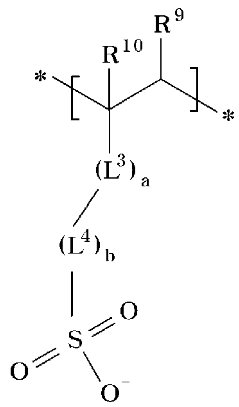

Chemical Formula 6:

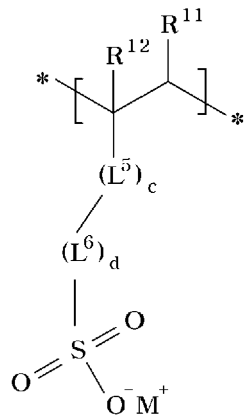

Chemical Formula 7:

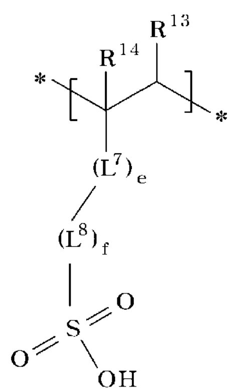

.

In Chemical Formulas 5 to 7,

$R^9$ to $R^{14}$ each independently is hydrogen or a C1 to C3 alkyl group,
$L^3$, $L^5$, and $L^7$ each independently is -C(=O)-, -C(=O)O-, -OC(=O)-, -O-, or -C(=O)NH-,
$L^4$, $L^6$, and $L^8$ each independently is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, d, e, and f are each independently an integer ranging from 0 to 2, and
in Chemical Formula 6,
M is an alkali metal.

12. In 1-11, the structural unit derived from (meth)acrylate or (meth)acrylic acid in an amount ranging from 10 mol% to 70 mol%, the cyano group-containing structural unit in an amount ranging from 20 mol% to 85 mol%, and the sulfonate group-containing structural unit in an amount ranging from 0.1 mol% to 20 mol% are included in the (meth)acryl-based binder,
13. In 1-12, the coating layer has a thickness ranging from 1 μm to 4 μm.

According to another example embodiment, a rechargeable lithium battery includes a positive electrode, a negative electrode, and the separator for a rechargeable lithium battery located between the positive electrode and the negative electrode.

BRIEF DESCRIPTION OF THE DRAWINGS

FIG. 1 is a cross-sectional view illustrating a separator for a rechargeable lithium battery, according to one example embodiment.
FIGS. 2 to 5 are schematic cross-sectional views illustrating a rechargeable lithium battery, according to one example embodiment.

DETAILED DESCRIPTION

Hereinafter, example embodiments of the present disclosure are described in detail. However, the embodiments are presented as examples, and the present disclosure is not limited thereto, and the present disclosure is only defined by the scope of the appended claims.
Unless otherwise stated herein, when a part such as a layer, a membrane, an area, a plate, etc. is described as being disposed "on" another part, it includes not only a case where the part is "directly on" another part, but also a case where there are other parts therebetween.
Unless otherwise stated herein, the singular may also include the plural
In the present specification, "a combination thereof" may indicate a mixture, stack, composite, copolymer, alloy, blend, or reaction product of constituents.
Unless otherwise defined herein, "particle diameter D100" refers to a diameter of a particle with a cumulative volume of 100% by volume in a particle diameter distribution. The particle diameter D100 may be measured by methods known to those skilled in the art and for example, may be measured using a particle size analyzer, a transmission electron microscope photograph, or a scanning electron microscope photograph. As another method, the particle diameter D100 may be obtained by measuring the particle diameter using a measuring device using dynamic light scattering, performing data analysis to count the number of particles for each particle size range, and then calculating the particle diameter D100 therefrom. Alternatively, the particle diameter D100 may be measured using a laser diffraction method. When measuring the particle diameter by the laser diffraction method, for example, the particle diameter D100 based on 100% of a particle diameter distribution in the measuring device is calculated by dispersing particles to be measured in a dispersion medium, then introducing the dispersion medium into a commercially available laser diffraction particle diameter measuring device (e.g., Microtrac's MT 3000), and radiating ultrasonic waves of 28 kHz with an output of 60 W. The laser diffraction method may be performed according to ISO 13320:2020. According to the IUPAC definition, the equivalent diameter of a non-spherical particle is equal to a diameter of a spherical particle that exhibits identical properties to that of the investigated non-spherical particle.
Unless otherwise defined herein, "particle diameter D50" is an average particle diameter D50, which refers to a diameter of a particle with a cumulative volume of 50% by volume in a particle diameter distribution. The particle diameter distribution may be obtained from the above method in the particle diameter D100.

In the present specification, "(meth)acryl" refers to acryl and/or methacryl.

Hereinafter, unless otherwise defined, "substitution" indicates that hydrogen in a compound is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

Hereinafter, the C1 to C3 alkyl group may be or include at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, at least one of a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" indicates including one or more heteroatoms such as or including at least one of N, O, S, Si, and P.

In addition, in the chemical formulas, the symbol * refers to a part that is connected to the same or different atom, group, or structural unit.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" indicates "X or more and Y or less ($X\leq$ and $\leq Y$)."

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

A separator for a lithium secondary battery according to one example embodiment includes a porous substrate and a coating layer located on at least one surface of the porous substrate. The coating layer includes a cross-linked product of a binder, a cross-linking agent, and carboxyalkyl cellulose or a salt thereof; and a filler. The binder includes a (meth)acryl-based binder including a structural unit derived from (meth)acrylate or (meth)acrylic acid, a cyano group-containing structural unit, and a sulfonate group-containing structural unit. The cross-linking agent includes one or more of an aziridine-based cross-linking agent and a carbodiimide-based cross-linking agent.

Because the coating layer includes the cross-linked product of the (meth)acryl-based binder, the cross-linking agent, and the carboxyalkyl cellulose or a salt thereof; and the filler, the separator for a rechargeable lithium battery may have a significantly low dry shrinkage rate and shrinkage rate in an electrolyte.

According to one example embodiment, the coating layer may be formed of or include a composition including the (meth)acryl-based binder, one or more of the aziridine-based cross-linking agent and the carbodiimide-based cross-linking agent, the carboxyalkyl cellulose or a salt thereof, and the filler.

According to one example embodiment, the cross-linked product may be or include a heat cross-linked product.

According to one example embodiment, the dry shrinkage rate of the separator for a rechargeable lithium battery may be 5% or less in each of a machine direction (MD) and a transverse direction (TD), and the shrinkage rate in the electrolyte may be 20% or less, for example, 15% or less, for example, 10% or less, or for example, 5% or less in each of the MD and the TD.

According to one example embodiment, the separator for a rechargeable lithium battery exhibits a significantly low shrinkage rate in the electrolyte. The shrinkage rate in the electrolyte is obtained in consideration of an application location of the separator in the rechargeable lithium battery. The separator may be saturated with the electrolyte. A separator with a low shrinkage rate in an electrolyte can increase the stability of the battery by maintaining heat resistance properties without weakening the mechanical properties of the (meth)acryl-based binder when the separator is saturated with the electrolyte.

A separator formed of or including a composition including the (meth)acryl-based binder but not including the aziridine-based cross-linking agent and the carbodiimide-based cross-linking agent as a cross-linking agent, or including a cross-linking agent other than the aziridine-based cross-linking agent and the carbodiimide-based cross-linking agent,

may not exhibit the above shrinkage rate range in the electrolyte. According to one example embodiment, one or more of the aziridine-based cross-linking agent and the carbodiimide-based cross-linking agent may be included in an amount of 95 wt% or more, for example, ranging from 98 wt% to 100 wt%, or for example, 100 wt% of the total cross-linking agent in the composition.

A separator formed of or including a composition including the aziridine-based cross-linking agent or the carbodiimide-based cross-linking agent and the filler but not including the (meth)acryl-based binder, or including a binder other than the (meth)acryl-based binder, may not exhibit the above dry shrinkage rate and shrinkage rate ranges in the electrolyte. According to one example embodiment, the (meth)acryl-based binder may be included in an amount of 95 wt% or more, for example, ranging from 98 wt% to 100 wt%, or for example, 100 wt% of the total binder in the composition.

A separator formed of or including a composition not including carboxyalkyl cellulose or a salt thereof may not exhibit the above dry shrinkage rate and shrinkage rate ranges in the electrolyte.

**Coating layer**

The coating layer may be or include a heat-resistant layer, and the binder may be or include a heat-resistant binder.

The binder includes a (meth)acryl-based binder including a structural unit derived from (meth)acrylate or (meth) acrylic acid, a cyano group-containing structural unit, and a sulfonate group-containing structural unit.

According to one example embodiment, the total amount of the structural unit derived from (meth)acrylate or (meth)acrylic acid, the cyano group-containing structural unit, and the sulfonate group-containing group in the binder may be 95 mol% or more, for example, may range from 99 mol% to 100 mol% or may be 100 mol%.

The (meth)acryl-based binder is a water-based heat-resistant binder, and may fix the filler to a porous substrate, provide bonding strength so that the coating layer is bonded to the porous substrate and an electrode, and contribute to increasing the heat resistance, air permeability, and oxidation resistance of the separator.

In the structural unit derived from (meth)acrylate or (meth)acrylic acid, the (meth)acrylate may be or include a conjugate base of (meth)acrylic acid, a (meth)acrylic acid salt, or a derivative thereof. The structural unit derived from (meth)acrylate or (meth)acrylic acid may be represented, for example, by at least one of Chemical Formula 1, 2, 3 below, or a combination thereof:

Chemical Formula 1:

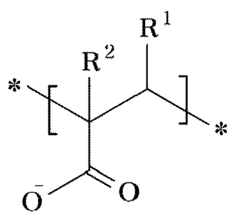

Chemical Formula 2:

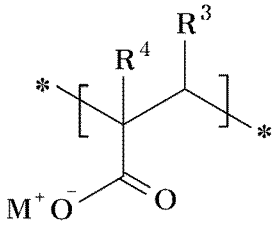

Chemical Formula 3:

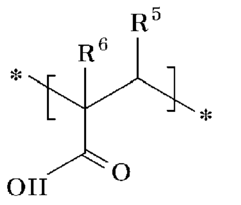

In Chemical Formulas 1 to 3,
$R^1$ to $R^6$ each independently is hydrogen or a methyl group, and
in Chemical Formula 2,
M is an alkali metal.
The alkali metal may be or include, for example, at least one of lithium, sodium, potassium, rubidium, or cesium.
The structural unit derived from (meth)acrylate or (meth)acrylic acid may be included in the (meth)acryl-based binder in an amount ranging from 10 mol% to 70 mol%, for example, 10, 15, 20, 25, 30, 35, 40, 45, 50, 55, 60, 65, 70 mol%, from 10 mol% to 50 mol%, from 20 mol% to 60 mol%, or from 30 mol% to 60 mol%. When the structural unit derived from (meth)acrylate or (meth)acrylic acid is included within the above range, a separator including the (meth)acryl-based binder may exhibit a desired or improved bonding strength, heat resistance, air permeability, and oxidation resistance.
For example, the structural unit derived from (meth)acrylate or (meth)acrylic acid may include the structural unit represented by Chemical Formula 2 and the structural unit represented by Chemical Formula 3, and in this case, the structural unit represented by Chemical Formula 2 and the structural unit represented by Chemical Formula 3 may be included in a molar ratio of 10:1 to 1:2, 10:1 to 1:1, or 5:1 to 1:1.
The cyano group-containing structural unit may be, for example, represented by Chemical Formula 4 below:

Chemical Formula 4:

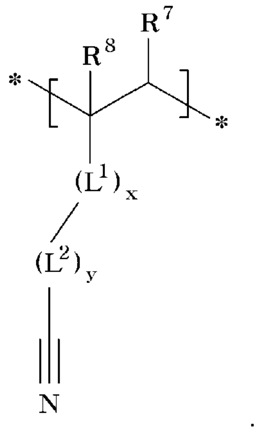

In Chemical Formula 4,

$R^7$ and $R^8$ each independently is hydrogen or a C1 to C3 alkyl group,
$L^1$ is -C(=O)-, -C(=O)O-, -OC(=O)-, -O-, or -C(=O)NH-,
x is an integer ranging from 0 to 2,
$L^2$ is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
y is an integer ranging from 0 to 2.

The cyano group-containing structural unit may be or include, for example, a structural unit derived from at least one of (meth)acrylonitrile, alkene nitrile, cyanoalkyl (meth)acrylate, or 2-(vinyloxy)alkanenitrile. Here, the alkene may be or include at least one of a C1 to C20 alkene, a C1 to C10 alkene, or a C1 to C6 alkene, the alkyl may be or include at least one of a C1 to C20 alkyl, a C1 to C10 alkyl, or a C1 to C6 alkyl, and the alkane may be or include at least one of a C1 to C20 alkane, a C1 to C10 alkane, or a C1 to C6 alkane.
The alkene nitrile may be or include, for example, at least one of allyl cyanide, 4-pentenenitrile, 3-pentenenitrile, 2-pentenenitrile, 5-hexenenitrile, etc. The cyanoalkyl (meth)acrylate may be or include, for example, at least one of cyanomethyl (meth)acrylate, cyanoethyl (meth)acrylate, cyanopropyl (meth)acrylate, cyanooctyl (meth)acrylate, etc. The 2-(vinyloxy)alkanenitrile may be or include, for example, at least one of 2-(vinyloxy)ethanenitrile, 2-(vinyloxy)propanenitrile, and the like.
The cyano group-containing structural unit may be included in the (meth)acryl-based binder in an amount ranging from 20 mol% to 85 mol%, for example, 20, 25, 30, 35, 40, 45, 50, 55, 60, 65, 70, 75, 80, 85 mol%, from 30 mol% to 85 mol%, from 40 mol% to 85 mol%, from 30 mol% to 70 mol%, or from 30 mol% to 60 mol%. When the cyano group-containing structural unit is included within the above range, the (meth)acryl-based binder and the separator including the (meth) acryl-based binder can exhibit a desired or improved oxidation resistance and readily exhibit a desired or improved bonding strength, heat resistance, and air permeability.

The sulfonate group-containing structural unit may be or include a structural unit including a conjugate base of sulfonic acid, a sulfonate salt, sulfonic acid, or a derivative thereof. For example, the sulfonate group-containing structural unit may be represented by at least one of Chemical Formula 5, 6, 7 below, or a combination thereof:

Chemical Formula 5:

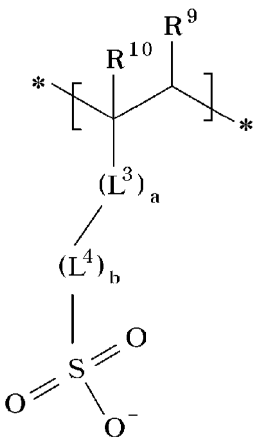

Chemical Formula 6:

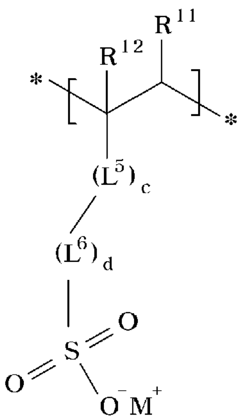

Chemical Formula 7:

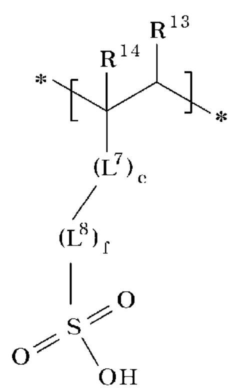

In Chemical Formulas 5 to 7,

$R^9$ to $R^{14}$ each independently is hydrogen or a C1 to C3 alkyl group,
$L^3$, $L^5$, and $L^7$ each independently is -C(=O)-, -C(=O)O-, -OC(=O)-, -O-, or -C(=O)NH-,
$L^4$, $L^6$, and $L^8$ each independently is a substituted or unsubstituted C1 to C10 alkylene group, a substituted or

unsubstituted C3 to C20 cycloalkylene group, a substituted or unsubstituted C6 to C20 arylene group, or a substituted or unsubstituted C3 to C20 heterocyclic group,

a, b, c, d, e, and f are each independently an integer ranging from 0 to 2, and

in Chemical Formula 6,

M is an alkali metal.

For example, in Chemical Formulas 5 to 7,

$L^3$, $L^5$, and $L^7$ each independently is -C(=O)NH-,

$L^4$, $L^6$, and $L^8$ each independently is a C1 to C10 alkylene group, and

a, b, c, d, e, and f are an integer equal to 1.

The sulfonate group-containing structural unit may include only one or two or more of the structural unit represented by Chemical Formula 5, the structural unit represented by Chemical Formula 6, and the structural unit represented by Chemical Formula 7. As an example, the sulfonate group-containing structural unit may include the structural unit represented by Chemical Formula 6, and as another example, the sulfonate group-containing structural unit may include the structural unit represented by Chemical Formula 6 and the structural unit represented by Chemical Formula 7.

The sulfonate group-containing structural unit may be or include, for example, a structural unit derived from at least one of vinyl sulfonic acid, allyl sulfonic acid, styrene sulfonic acid, anethole sulfonic acid, (meth)acrylamidoalkane sulfonic acid, sulfoalkyl (meth)acrylate, or salts thereof.

Here, the alkane may be or include at least one of a C1 to C20 alkane, a C1 to C10 alkane, or a C1 to C6 alkane, and the alkyl may be or include at least one of a C1 to C20 alkyl, a C1 to C10 alkyl, or a C1 to C6 alkyl. The salt is composed of the above-described sulfonic acid and an appropriate ion. The ion may be or include, for example, an alkali metal ion, and in this case, the salt may be or include an alkali metal salt of sulfonic acid.

The (meth)acrylamidoalkane sulfonic acid may be or include, for example, 2-(meth)acrylamido-2-methylpropanesulfonic acid, and the sulfoalkyl (meth)acrylate may be or include, for example, at least one of 2-sulfoethyl (meth) acrylate, 3-sulfopropyl (meth)acrylate, and the like.

The sulfonate group-containing structural unit may be included in the (meth)acryl-based binder in an amount ranging from 0.1 mol% to 20 mol%, for example, 0.1, 0.5, 1, 2, 3, 4, 5, 6, 7, 8, 9, 10, 11, 12, 13, 14, 15, 16, 17, 18, 19, 20 mol%, from 0.1 mol% to 10 mol%, from 1 mol% to 20 mol%, or from 1 mol% to 10 mol%. When the sulfonate group-containing structural unit is included within the above range, the (meth)acryl-based binder, and the separator including the (meth)acryl-based binder, can exhibit a desired or improved bonding strength, heat resistance, air permeability, and oxidation resistance.

As described above, the (meth)acryl-based binder may include an alkali metal. The alkali metal may be present in the form of a cation and for example, may be or include at least one of lithium, sodium, potassium, rubidium, or cesium. For example, the alkali metal may be combined with the (meth)acryl-based binder and may be present in the form of a salt. The alkali metal may assist in the synthesis of the (meth)acryl-based binder in an aqueous solvent, increase the bonding strength of the coating layer, and increase the heat resistance, air permeability, oxidation resistance, and the like, of the separator.

The alkali metal may be included in an amount ranging from 1 wt% to 40 wt% of the alkali metal and the (meth) acryl-based binder, for example, from 1 wt% to 30 wt%, from 1 wt% to 20 wt%, or from 10 wt% to 20 wt%. For example, the (meth)acryl-based binder and the alkali metal may be included in a weight ratio of 99:1 to 60:40, a weight ratio of 99:1 to 70:30, for example, a weight ratio of 99:1 to 80:20, or for example, a weight ratio of 90:10 to 80:20.

In addition, the alkali metal may be included in an amount ranging from 0.1 mol% to 1.0 mol% with respect to the total content of the alkali metal and the (meth)acryl-based binder. When the alkali metal is included within the above range, the coating layer can have a desired or improved bonding strength, and a separator including the coating layer may exhibit desired or improved heat resistance, air permeability, and oxidation resistance.

The (meth)acryl-based binder may be, for example, represented by Chemical Formula 8 below:

Chemical Formula 8:

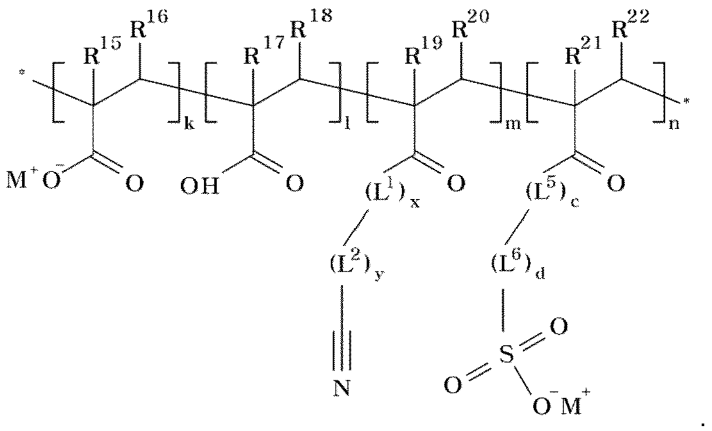

In Chemical Formula 8,

$R^{15}$ to $R^{18}$ each independently is hydrogen or a methyl group,
$R^{19}$ to $R^{22}$ each independently is hydrogen or a C1 to C3 alkyl group,
$L^1$ and $L^5$ each independently is -C(=O)-, -C(=O)O-, -OC(=O)-, -O-, or -C(=O)NH-,
$L^2$ and $L^6$ each independently is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
x, y, c, and d are each independently an integer ranging from 0 to 2,
M is an alkali metal such as lithium, sodium, potassium, rubidium, or cesium, and
k, l, m, and n refer to a molar ratio of each structural unit.

As an example, in Chemical Formula 8, k+l+m+n=1. In addition, as an example, $0.1 \leq (k+l) \leq 0.5$, $0.3 \leq m \leq 0.85$, and $0.001 \leq n \leq 0.2$, for example, $0.1 \leq k \leq 0.5$ and $0 \leq l \leq 0.25$.
For example, in Chemical Formula 8, x=y=0, $L^5$ is -C(=O)NH-, $L^6$ is a C1 to C10 alkylene group, and c=d=1.
A degree of substitution of the alkali metal ($M^+$) in the (meth)acryl-based binder may range from 0.5 to 1.0, for example, from 0.6 to 0.9 or from 0.7 to 0.9 with respect to (k+n). When the degree of substitution of the alkali metal satisfies the above range, the (meth)acryl-based binder, and the separator including the (meth)acryl-based binder, can exhibit desired or improved bonding strength, heat resistance, and oxidation resistance.
The (meth)acryl-based binder may be in various forms, such as an alternating polymer in which the units are alternately distributed, a random polymer in which the units are randomly distributed, or a graft polymer in which some structural units are grafted.
A weight average molecular weight (Mw) of the (meth)acryl-based binder may range from 200,000 g/mol to 700,000 g/mol, for example, 200,000 g/mol to 600,000 g/mol, or for example, 300,000 g/mol to 600,000 g/mol. When the weight average molecular weight of the (meth)acryl-based binder satisfies the above range, the (meth)acryl-based binder, and the separator including the (meth)acryl-based binder, can exhibit desired or improved bonding strength, heat resistance, air permeability, and oxidation resistance. The weight average molecular weight may be a polystyrene-converted average molecular weight measured using gel permeation chromatography.
A glass transition temperature of the (meth)acryl-based binder may range from 200 °C to 280 °C, for example, from 210 °C to 280 °C. When the glass transition temperature of the (meth)acryl-based binder satisfies the above range, the (meth)acryl-based binder, and the separator including the (meth)acryl-based binder, can exhibit desired or improved bonding strength, heat resistance, air permeability, and oxidation resistance. The glass transition temperature may be a value measured by, e.g., differential scanning calorimetry.
The (meth)acryl-based binder may be prepared by, e.g., a solution polymerization method.
According to one example embodiment, the (meth)acryl-based binder may be included in the coating layer of the separator in the form of a film.
The (meth)acryl-based binder may be included in an amount ranging from 25 wt% to 75 wt%, for example, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75 wt%, from 30 to 70 wt% or from 30 to 60 wt% of the total of the (meth) acryl-based binder, the cross-linking agent, and the carboxyalkyl cellulose or a salt thereof. Within the above range, the above shrinkage rate of the separator can be readily achieved.
The cross-linking agent includes one or more of an aziridine-based cross-linking agent and a carbodiimide-based cross-linking agent. The aziridine-based cross-linking agent and the carbodiimide-based cross-linking agent may

crosslink the (meth)acryl-based binder, and allow the separator to readily satisfy the above dry shrinkage rate and shrinkage rate ranges in the electrolyte.

For example, the cross-linking agent may be or include an aziridine-based cross-linking agent. The aziridine-based cross-linking agent can further reduce the dry shrinkage rate and the shrinkage rate in the electrolyte compared to the carbodiimide-based cross-linking agent.

The aziridine-based cross-linking agent may be or include a bi-functional or higher aziridine-based cross-linking agent. Herein, "bi-functional or higher" indicates that two or more aziridine groups are present in a molecule. According to one example embodiment, the aziridine-based cross-linking agent may be or include a bi- or tri-functional aziridine-based cross-linking agent.

For example, the aziridine-based cross-linking agent may include one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

According to one example embodiment, the carbodiimide-based cross-linking agent may contain one or more of a monocarbodiimide-based compound and a polycarbodiimide-based compound.

According to one example embodiment, the carbodiimide-based cross-linking agent may be or include a monocarbodiimide-based compound having the chemical formula R-N=C=N-R' (R and R' each independently is a substituted or unsubstituted C1 to C5 alkyl group or a substituted or unsubstituted C5 to C10 cycloalkyl group).

According to another example embodiment, the carbodiimide-based cross-linking agent may be or include a polycarbodiimide-based compound prepared by subjecting a diisocyanate to a decarboxylation condensation reaction in the presence of a carbodiimide catalyst.

The diisocyanate included in the decarboxylation condensation reaction may include, for example, at least one of 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylene diisocyanate.

Examples of the carbodiimide catalyst that can be included in the decarboxylation condensation reaction may include phosphorene oxides such as a 1-phenyl-2-phosphorene-1-oxide, a 3-methyl-2-phosphorene-1-oxide, a 1-ethyl-3-methyl-2-phosphorene-1-oxide, a 1-ethyl-2-phosphorene-1-oxide, or 3-phosphorene isomers thereof.

One or more of the cross-linking agents, for example, the aziridine-based cross-linking agent and the carbodiimide-based cross-linking agent, may be included in an appropriate content with respect to the binder, for example, the (meth)acryl-based binder, the cross-linking agent, and the carboxyalkyl cellulose or a salt thereof. According to one example embodiment, the cross-linking agent may be included in an amount ranging from 5 wt% to 30 wt%, for example, 5, 6, 7, 8, 9, 10, 11, 12, 13, 14, 15, 16, 17, 18, 19, 20, 21, 22, 23, 24, 25, 26, 27, 28, 29, 30 wt%, from 10 to 30 wt% or from 10 to 20 wt% of the total of the (meth)acryl-based binder, the cross-linking agent, and the carboxyalkyl cellulose or a salt thereof. Within the above range, there may be or include a binder cross-linking effect.

The carboxyalkyl cellulose or a salt thereof may react with the cross-linking agent by having a cyclic structure in the molecule and having a carboxyl group in the molecule, making it possible to increase the modulus of the coating layer and further reduce the dry shrinkage rate and the shrinkage rate in the electrolyte.

The carboxyalkyl cellulose may be or include, for example, carboxymethyl cellulose.

The salt of the carboxyalkyl cellulose may be or include, for example, a monovalent metal salt of carboxyalkyl cellulose, for example, a sodium salt of carboxyalkyl cellulose.

The carboxyalkyl cellulose or a salt thereof may be included in an appropriate content with respect to the binder, for example, the (meth)acryl-based binder and the cross-linking agent. According to one example embodiment, the carboxyalkyl cellulose or a salt thereof may be included in an amount ranging from 20 wt% to 70 wt%, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 wt%, for example, from 30 wt% to 70 wt%, or for example, from 30 wt% to 60 wt% of the total of the (meth)acryl-based binder, the cross-linking agent, and the carboxyalkyl cellulose or a salt thereof. Within the above range, it may be possible to further reduce the dry shrinkage rate and the shrinkage rate in the electrolyte by increasing the modulus of the coating layer.

The filler may include a filler with a particle diameter D100 of 1.0 μm or less. Within the above range, it may be possible to satisfy the dry shrinkage rate and the shrinkage rate in the electrolyte when the (meth)acryl-based binder is combined with the aziridine-based cross-linking agent. For example, the filler may have a particle diameter D100 of 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0 μm, 0.8 μm or less, 0.7 μm or less, or ranging from 0.3 μm to 0.7 μm.

According to one example embodiment, the filler with a particle diameter D100 of 1.0 μm or less may be included in an amount of 95 wt% or more, for example, ranging from 95 wt% to 100 wt%, from 98 wt% to 100 wt%, or 100 wt% of the

total filler in the coating layer.

According to one example embodiment, the filler may have a particle diameter D50 of 0.4 μm or less, for example, 0.05, 0.1, 0.15, 0.2, 0.25, 0.3, 0.35, 0.4 μm, 0.35 μm or less. Within the above range, it is possible to increase heat resistance.

The filler may be or include, for example, an inorganic filler, an organic filler, an organic-inorganic composite filler, or a combination thereof. The inorganic filler may be or include a ceramic material that can increase heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The organic filler may include an acrylic compound, an imide compound, an amide compound, or a combination thereof, but is not limited thereto. The organic filler may have a core-shell structure, but is not limited thereto.

The filler may be substantially spherical, substantially plate-shaped, cubic, or amorphous. For example, the filler may be plate-shaped or cubic, and in another example, may be cubic. The substantially cubic shape may have the above-described significantly low shrinkage rate.

The filler may be included in an appropriate content with respect to the binder, for example, the (meth)acryl-based binder. According to one example embodiment, the (meth)acryl-based binder and the filler may be included in a mass ratio in a range of 1:10 to 1:50, for example, 1:10, 1:15, 1:20, 1:25, 1:30, 1:35, 1:40, 1:45, 1:50, 1:20 to 1:30. Within the above range, it is possible to increase heat resistance.

The filler may be included in an amount ranging from 50 wt% to 99 wt%, for example, from 70 wt% to 99 wt%, from 75 wt% to 99 wt%, from 80 wt% to 99 wt%, from 85 wt% to 99 wt%, from 90 wt% to 99 wt%, or from 95 wt% to 99 wt% of the total amount of the coating layer. When the filler is included within the above range, the separator may exhibit desired or improved heat resistance, durability, oxidation resistance, and stability.

The coating layer may have a thickness ranging from 0.01 μm to 20 μm, and within the above range, may have a thickness ranging from 1 μm to 10 μm, 1 μm to 5 μm, 1 μm to 4 μm, or 1 μm to 3 μm.

A ratio of the thickness of the coating layer to the thickness of the porous substrate may range from 0.05 to 0.5, for example, from 0.05 to 0.4 or from 0.1 to 0.4. Within the above range, the separator may exhibit desired or improved air permeability, heat resistance, bonding strength, etc. Herein, "thickness of the coating layer" indicates a thickness of one coating layer when the coating layer is formed on only one surface of the porous substrate, and indicates a thickness of two coating layers when the coating layer is formed on both surfaces of the porous substrate.

**Porous substrate**

The porous substrate may be or include a substrate having multiple pores and commonly included in electrochemical devices. The porous substrate may be or include a polymer membrane formed of or including any one polymer such as or including at least one of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin, and the polyolefin-based substrate may have a desired or improved shutdown function, thereby contributing to increasing the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin or include a copolymer of olefin and non-olefin monomers.

The porous substrate may have a thickness ranging from 1 μm to 40 μm, for example, from 1 μm to 30 μm, from 1 μm to 20 μm, or from 5 μm to 15 μm.

The separator for a rechargeable lithium battery according to one example embodiment may exhibit a desired or improved air permeability and have an air permeability value of, for example, less than 200 sec/100 cc, for example, 180 sec/100 cc or less, or 160 sec/100 cc or less. That is, the separator may have an air permeability value of less than 40 sec/100 cc·1 μm per unit thickness, for example, 30 sec/100 cc·1 μm or less, or 25 sec/100 cc·1 μm or less. Herein, the air permeability refers to the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be obtained by measuring the time it takes for 100 cc of air to pass through the separator using an air permeability measurement device (EG01-55-1MR, Asahi Seiko Co., Ltd.).

The separator according to one example embodiment may be formed by applying a composition for forming a coating layer on one surface, or on both surfaces, of the porous substrate, drying, and then curing the coating layer. The

curing may be performed using conventional methods known to those skilled in the art.

FIG. 1 is a cross-sectional view illustrating a separator for a rechargeable lithium battery according to one example embodiment.

Referring to FIG. 1, the separator for a rechargeable lithium battery includes a porous substrate 1 and a coating layer 2 located on one surface of the porous substrate 1. The coating layer 2 includes a filler 3 and a cross-linked product 4 of a (meth)acryl-based binder, a cross-linking agent, and carboxyalkyl cellulose or a salt thereof.

Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be located between the positive electrode and the negative electrode.

Positive electrode

A positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can be configured as a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be included. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0<\alpha<2$); $Li_aNi_{1-b-c}Mn_bX_cO_{2-\alpha}D_\alpha$ ($0.90 \le a \le 1.8$, $0 \le b \le 0.5$, $0 \le c \le 0.5$, and $0<\alpha<2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above Chemical Formulas, A is at least one of Ni, Co, Mn, or a combination thereof; X is at least one of Al, Ni, Co, Mn, Cr, Fe, Mg, Sr, V, a rare earth element or a combination thereof; D is at least one of O, F, S, P, or a combination thereof; G is at least one of Al, Cr, Mn, Fe, Mg, La, Ce, Sr, V, or a combination thereof; and $L^1$ is at least one of Mn, Al, or a combination thereof.

The positive electrode active material may be or include, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.

The binder is configured to attach the positive electrode active material particles to each other, and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the

rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

Al may be included as the current collector, but is not limited thereto.

Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOx ($0 < x < 2$), a Si-Q alloy (where Q is at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

The binder may be configured to attach the negative electrode active material particles to each other and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at

least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like. in a form of a metal powder or a metal fiber; a conductive polymer such as a polyphenylene derivative; or a mixture thereof.

The negative current collector may at least one of include a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include at least a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio in a range of 1:1 to 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIGS. 2 to 5 are schematic views illustrating a rechargeable lithium battery, according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely example embodiments of the present disclosure, and the present disclosure is not limited to the following examples.

**Preparation Example 1**

In a 3 L four-necked flask provided with a stirrer, a thermometer, and a cooling tube, a process of adding distilled water (968 g), acrylic acid (AA) (54.00 g, 0.62 mol), ammonium persulfate (0.65 g, 2.85 mol), 2-acrylamido-2-methylpropane sulfonic acid (AMPS) (6.00 g, 0.02 mol), and a 20% aqueous sodium hydroxide solution (0.8 equivalents with respect to the total amount of acrylic acid and 2-acrylamido-2-methylpropanesulfonic acid), then reducing an internal pressure to 10 mmHg using a diaphragm pump, and returning the internal pressure to a normal pressure using nitrogen was repeated three times, and then acrylonitrile (AN) (60.00 g, 0.94 mol) was added.

The reaction was carried out for 18 hours while controlling the temperature of a reaction solution to be stable between 65 °C and 70 °C, and after adding ammonium persulfate (0.22 g, 0.95 mol) for the second time, the temperature was raised to 80 °C, and the reaction was carried out for another 4 hours. After cooling to room temperature, the pH of the reaction solution was adjusted to 7 to 8 using a 25% aqueous ammonia solution.

Accordingly, poly(acrylic acid-co-acrylonitrile-co-2-acrylamido-2-methylpropane sulfonic acid) sodium salt as an acryl-based copolymer was prepared. The acrylic acid, the acrylonitrile, and the 2-acrylamido-2-methylpropane sulfonic acid were included in a molar ratio of 39:59:2. A non-volatile component in about 10 mL of the reaction solution (reaction product) was measured, and the measurement result was 9.0 wt% (theoretical value: 10%).

**Preparation Example 2**

An acryl-based copolymer was prepared in the same manner as in Preparation Example 1, with a difference that acrylic acid (50 g, 0.69 mol) and acrylonitrile (50 g, 0.94 mol) were used and 2-acrylamido-2-methylpropane sulfonic acid was not used. The acrylic acid and the acrylonitrile were included in a molar ratio of 42:58. The non-volatile component of the reaction solution was 9.0 wt% (theoretical value: 10%).

**Preparation Example 3**

An acryl-based copolymer was prepared in the same manner as in Preparation Example 1, with a difference that acrylic acid (50 g, 0.69 mol) and 2-acrylamido-2-methylpropane sulfonic acid (50 g, 0.24 mol) were used and acrylonitrile was not used. The acrylic acid and the 2-acrylamido-2-methylpropane sulfonic acid were included in a molar ratio of 74:26. The non-volatile component of the reaction solution was 9.0 wt% (theoretical value: 10%).

Table 1 below shows the molar ratio, weight average molecular weight, and glass transition temperature of each monomer among the (meth)acryl-based binders prepared in Preparation Examples 1 to 3.

Table 1:

| | Molar ratio of monomers | | | Weight average molecular weight (g/mol) | Glass transition temperature (°C) |
|---|---|---|---|---|---|
| | AA | AN | AMPS | | |
| Preparation Example 1 | 39 | 59 | 2 | 310000 | 280 |
| Preparation Example 2 | 42 | 58 | 0 | 320000 | 278 |
| Preparation Example 3 | 74 | 0 | 26 | 293000 | 305 |

**Example 1**

A dispersion was prepared by mixing the acryl-based copolymer (10 wt% in distilled water) prepared in Preparation Example 1 and boehmite (particle diameter D100: 0.5 μm, particle diameter D50: 0.2 μm, cubic) as a filler in a mass ratio of 1:30 parts by weight for the acryl-based copolymer and the filler, adding the mixture to a water solvent, and then milling and dispersing the same at 25 °C for 30 minutes using a bead mill.

A composition for forming a coating layer was prepared by adding trimethylolpropane tris (2-methyl-1-aziridine propionate) (tri-functional aziridine-based cross-linking agent) as an aziridine-based cross-linking agent and carboxymethyl cellulose (CMC) and adding water so that the total solid content became 20 wt%. In this case, the acryl-based copolymer, the carboxyalkyl cellulose, and the aziridine-based cross-linking agent were included in a ratio of 45:45:10 (parts by weight) with respect to the total of 100 parts by weight.

A separator for a rechargeable lithium battery was manufactured by coating one surface of a polyethylene film (thickness: 8 μm, air permeability: 120 sec/100 cc, and puncture strength: 480 kgf) as a porous substrate with the composition for forming a coating layer using a direct metering (DM) coating method and then drying and aging the same in an oven at 80 °C for 16 hours.

**Examples 2 to 7**

Separators for a rechargeable lithium battery were manufactured in the same manner as in Example 1, with a difference that in Example 1, as shown in Table 2 below, boehmite (cubic) was used as a filler, but the D50 and D100 were changed, the weight ratio of the acryl-based copolymer and the filler was changed, and the contents of the acryl-based copolymer, the carboxyalkyl cellulose, and the aziridine-based cross-linking agent were changed

**Example 8**

A separator for a rechargeable lithium battery was manufactured in the same manner as in Example 1, with a difference that a carbodiimide-based cross-linking agent polycarbodiimide (tri-functional carbodiimide cross-linking agent, Carbodilite SV-02) was used instead of the aziridine-based cross-linking agent.

**Example 9**

A separator for a rechargeable lithium battery was manufactured in the same manner as in Example 1, with a difference that in Example 1, boehmite (particle diameter D100: 0.5μm, particle diameter D50: 0.2 μm, plate-shaped) was used.

**Comparative Examples 1 to 8**

Separators for a rechargeable lithium battery were manufactured in the same manner as in Example 1, with a difference that in Example 1, as shown in Table 2 below, boehmite was used as a filler, but the D50 and D100 were changed, the weight ratio of the acryl-based copolymer and the filler was changed, and the contents of the acryl-based copolymer, the carboxyalkyl cellulose, and the aziridine-based cross-linking agent were changed.
PVA is a homopolymer of polyvinyl alcohol.
An epoxy-based cross-linking agent is ethylene glycol diglycidyl ether.
PVDF is polyvinylidene fluoride.
SBR is styrene butadiene rubber.

**Dry shrinkage rate (units: %)**

Samples were manufactured by cutting the separators for a rechargeable lithium battery of Examples and Comparative Examples to a size of 8 cm×8 cm. A shrinkage rate in each of a machine direction (MD) and a transverse direction (TD) was calculated by drawing a square with a size of 5 cm×5 cm on surfaces of the samples, then putting the samples between pieces of paper or alumina powder, leaving the samples in an oven at 150 °C for 1 hour, taking the samples out, and then measuring the side dimensions of the drawn square. The shrinkage rate was calculated according to Equation 1 below.

Equation 1:

$$\text{Shrinkage rate} = (L0 - L1) / L0 \times 100$$

L0 denotes an initial length of the separator, and L1 denotes a length of the separator after being left at 150 °C for 1 hour.

**Shrinkage rate in electrolyte (units: %)**

Samples were manufactured by cutting the separators for a rechargeable lithium battery of Examples and Comparative Examples to a size of 5 cm×5 cm.
A positive electrode slurry was prepared by mixing 97 wt% LiCoNiAl as a positive electrode active material, 1.5 wt% carbon nanotubes, and 1.5 wt% polyvinyl fluoride as a conductive material and adding water thereto.
A positive electrode was manufactured by applying the prepared positive electrode slurry on aluminum foil and

drying and rolling the prepared positive electrode slurry.

A negative electrode active material slurry was prepared by mixing 97.4 wt% negative electrode active material, 1.0 wt% carboxymethyl cellulose, 1.5 wt% styrene-butadiene-based rubber, and 0.1 wt% carbon nanotubes as a conductive material. A silicon-based negative electrode active material was used as the negative electrode active material. A negative electrode was manufactured by applying the prepared negative electrode slurry on copper foil and drying and rolling the prepared negative electrode slurry.

One sample was located between the positive electrode and the negative electrode to form three sets of positive electrode-sample-negative electrode laminates, which were then put in a pouch. 3 g of an electrolyte (ethylene carbonate, ethyl methyl carbonate, and dimethyl carbonate (a volume ratio of 30:50:20) in which 1.5M $LiPF_6$ was dissolved) was injected to completely saturate the laminate with the electrolyte, which was sealed and left at 25 °C for 12 hours. Then, a shrinkage rate in each of the MD and the TD was calculated by leaving the laminate in the oven at 150 °C for 1 hour, then taking the sample out, and measuring the side dimensions of the drawn square. The shrinkage rate was calculated according to Equation 1.

Table 2:

| | Filler | | Binder: Filler | Binder | Compound | Cross-linking agent | Binder:CMC:cross-linking agent | Dry shrinkage rate | | Shrinkage rate in electrolyte | |
|---|---|---|---|---|---|---|---|---|---|---|---|
| | D50 | D100 | | | | | | MD | TD | MD | TD |
| Example 1 | 0.2 | 0.5 | 1:30 | Preparation Example 1 | CMC | Aziridine | 45:45:10 | 1.7 | 1. 5 | 7 | 8 |
| Example 2 | 0.2 | 0.5 | 1:25 | Preparation Example 1 | CMC | Aziridine | 45:45:10 | 1.5 | 1. 8 | 4 | 5 |
| Example 3 | 0.2 | 0.5 | 1:20 | Preparation Example 1 | CMC | Aziridine | 45:45:10 | 1.7 | 1. 5 | 5 | 2 |
| Example 4 | 0.2 | 0.5 | 1:25 | Preparation Example 1 | CMC | Aziridine | 30:60:10 | 3.9 | 3. 1 | 6 | 5 |
| Example 5 | 0.2 | 0.5 | 1:25 | Preparation Example 1 | CMC | Aziridine | 60:30:10 | 1.5 | 2. 0 | 7 | 8 |
| Example 6 | 0.2 | 0.5 | 1:25 | Preparation Example 1 | CMC | Aziridine | 40:40:20 | 2.5 | 2. 5 | 9 | 11 |
| Example 7 | 0.3 | 0.8 | 1:20 | Preparation Example 1 | CMC | Aziridine | 45:45:10 | 2.5 | 2. 1 | 12 | 13 |
| Example 8 | 0.2 | 0.5 | 1:30 | Preparation Example 1 | CMC | Carbodiimide | 45:45:10 | 2.3 | 3. 0 | 15 | 18 |

(continued)

| | Filler | | Binder: Filler | Binder | Compound | Cross-linking agent | Binder:CMC:cross-linking agent | Dry shrinkage rate | | Shrinkage rate in electrolyte | |
|---|---|---|---|---|---|---|---|---|---|---|---|
| | D50 | D100 | | | | | | MD | TD | MD | TD |
| Example 9 | 0.2 | 0.5 | 1:30 | Preparation Example 1 | CMC | Aziridine | 45:45:10 | 2.5 | 2. 3 | 11 | 10 |
| Comparative Example 1 | 0.2 | 0.5 | 1:20 | Preparation Example 1 | - | Aziridine | 90:0:10 | 2.0 | 2. 6 | 28 | 27 |
| Comparative Example 2 | 0.6 | 1.3 | 1:20 | Preparation Example 1 | - | - | 100:0:0 | 5.1 | 5. 6 | 62 | 68 |
| Comparative Example 3 | 0.2 | 0.5 | 1:20 | PVA | - | Aziridine | 90:0:10 | 21 | 27 | 70 | 58 |
| Comparative Example 4 | 0.2 | 0.5 | 1:30 | Preparation Example 2 | CMC | Aziridine | 45:45:10 | 4.8 | 6. 1 | 25 | 32 |
| Comparative Example 5 | 0.2 | 0.5 | 1:30 | Preparation Example 3 | CMC | Aziridine | 45:45:10 | 7.5 | 8. 3 | 31 | 33 |
| Comparative Example 6 | 0.2 | 0.5 | 1:30 | Preparation Example 1 | CMC | Epoxy-based | 45:45:10 | 7 | 11 | 65 | 59 |
| Comparative Example 7 | 0.2 | 0.5 | 1:20 | Preparation Example 1 | PVDF | Aziridine | 45:45:10 | 15 | 14 | 64 | 57 |
| Comparative Example 8 | 0.2 | 0.5 | 1:20 | Preparation Example 1 | SBR | Aziridine | 45:45:10 | 11 | 12 | 61 | 65 |

As shown in Table 2, the separators of the Examples may exhibit a significantly low dry shrinkage rate and shrinkage rate in the electrolyte compared to the Comparative Examples, thereby increasing the stability of the battery.

A separator for a rechargeable lithium battery according to one example embodiment can exhibit a significantly

low dry shrinkage rate and shrinkage rate in an electrolyte, thereby increasing the stability of the battery.

## Claims

1. A separator (30) for a rechargeable lithium battery (100), the separator comprising:

   a porous substrate (1); and
   a coating layer (2) on at least one surface of the porous substrate,
   wherein the coating layer includes a cross-linked product of a binder, a cross-linking agent, and carboxyalkyl cellulose or a salt thereof and a filler,
   the binder includes a (meth)acryl-based binder including a structural unit derived from (meth)acrylate or (meth) acrylic acid, a cyano group-containing structural unit, and a sulfonate group-containing structural unit, and
   the cross-linking agent includes one or more of an aziridine-based cross-linking agent and a carbodiimide-based cross-linking agent.

2. The separator (30) of claim 1, wherein the coating layer (2) comprises a composition including the (meth)acryl-based binder, the cross-linking agent, the carboxyalkyl cellulose or a salt thereof, and the filler.

3. The separator (30) of claim 1 or 2, wherein the carboxyalkyl cellulose or a salt thereof comprises carboxymethyl cellulose or a salt thereof.

4. The separator (30) of any one of the preceding claims, wherein the carboxyalkyl cellulose or a salt thereof is included in an amount ranging from 20 wt% to 70 wt% of a total of the (meth)acryl-based binder, the cross-linking agent, and the carboxyalkyl cellulose or salt thereof.

5. The separator (30) of any one of the preceding claims, wherein the aziridine-based cross-linking agent comprises one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

6. The separator (30) of any one of the preceding claims, wherein the carbodiimide-based cross-linking agent comprises one or more of a monocarbodiimide-based compound and a polycarbodiimide-based compound.

7. The separator (30) of any one of the preceding claims, wherein the filler comprises a filler having a particle diameter D100 of 1.0 μm or less measured by a laser diffraction method.

8. The separator (30) of any one of the preceding claims, wherein the filler is one of substantially spherical, substantially plate-shaped, substantially cubic, and amorphous.

9. The separator (30) of any one of the preceding claims, wherein the (meth)acryl-based binder and the filler are included in a mass ratio in a range of 1:10 to 1:50.

10. The separator (30) of any one of the preceding claims, wherein, among a total of the (meth)acryl-based binder, the cross-linking binder, and the carboxyalkyl cellulose or a salt thereof, the (meth)acryl-based binder is included in an amount ranging from 25 wt% to 75 wt%, the cross-linking agent is included in an amount ranging from 5 wt% to 30 wt%, and the carboxyalkyl cellulose or a salt thereof is included in an amount ranging from 20 wt% to 70 wt%.

11. The separator (30) of any one of the preceding claims, wherein the structural unit derived from (meth)acrylate or (meth)acrylic acid is represented by at least one of Chemical Formula 1, 2, and 3:

Chemical Formula 1:

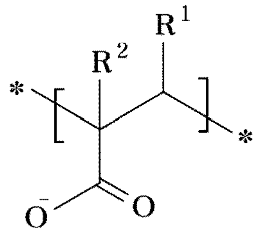

Chemical Formula 2:

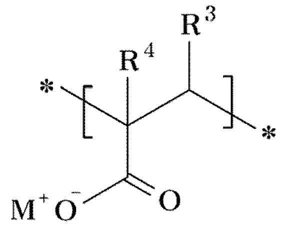

Chemical Formula 3:

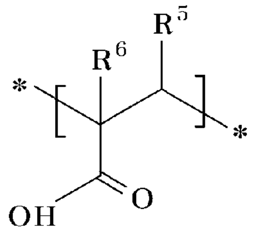

,

in Chemical Formulas 1 to 3,

$R^1$ to $R^6$ each independently comprises hydrogen or a methyl group, and
in Chemical Formula 2,
M comprises an alkali metal,
the cyano group-containing structural unit is represented by Chemical Formula 4:

Chemical Formula 4:

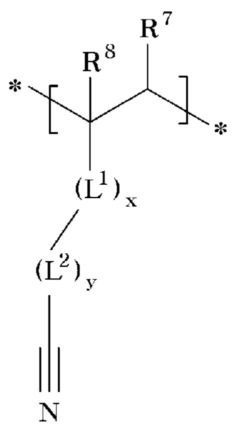

,

in Chemical Formula 4,
$R^7$ and $R^8$ each independently comprises hydrogen or a C1 to C3 alkyl group,
$L^1$ comprises -C(=O)-, -C(=O)O-, -OC(=O)-, -O-, or -C(=O)NH-,

x is an integer ranging from 0 to 2,
$L^2$ comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
y is an integer ranging from 0 to 2, and
the sulfonate group-containing structural unit is represented by at least one of Chemical Formula 5, 6, and 7:

Chemical Formula 5:

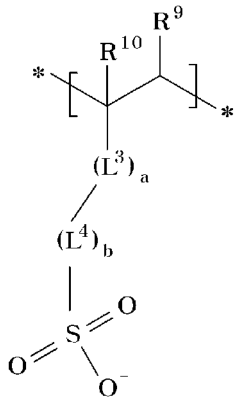

Chemical Formula 6:

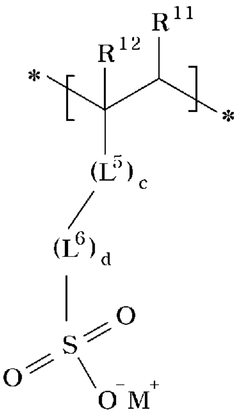

Chemical Formula 7:

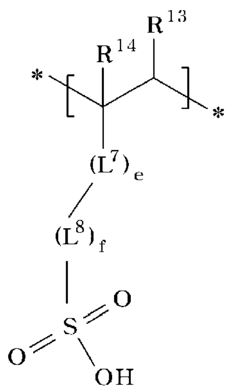

,

in Chemical Formulas 5 to 7,
$R^9$ to $R^{14}$ each independently comprises hydrogen or a C1 to C3 alkyl group,
$L^3$, $L^5$, and $L^7$ each independently comprises -C(=O)-, -C(=O)O-, -OC(=O)-, -O-, or - C(=O)NH-,

$L^4$, $L^6$, and $L^8$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, d, e, and f are each independently an integer ranging from 0 to 2, and
in Chemical Formula 6,
M comprises an alkali metal,
wherein "substituted" indicates that hydrogen is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group, or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**12.** The separator (30) of any one of the preceding claims, wherein the (meth)acryl-based binder comprises:

the structural unit derived from (meth)acrylate or (meth)acrylic acid in an amount ranging from 10 mol% to 70 mol%,
the cyano group-containing structural unit in an amount ranging from 20 mol% to 85 mol%, and
the sulfonate group-containing structural unit in an amount ranging from 0.1 mol% to 20 mol%.

**13.** The separator (30) of any one of the preceding claims, wherein the coating layer has a thickness ranging from 1 μm to 4 μm.

**14.** A rechargeable lithium battery (100) comprising:

a positive electrode (10);
a negative electrode (20); and
the separator (30) of claim 1 located between the positive electrode and the negative electrode.

FIG. 1

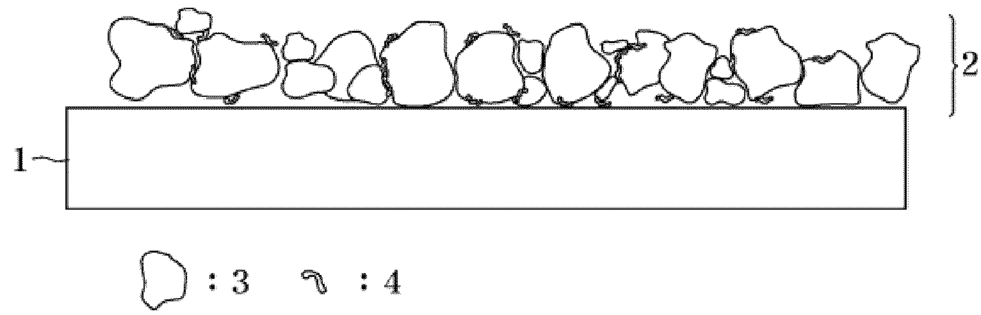

FIG. 2

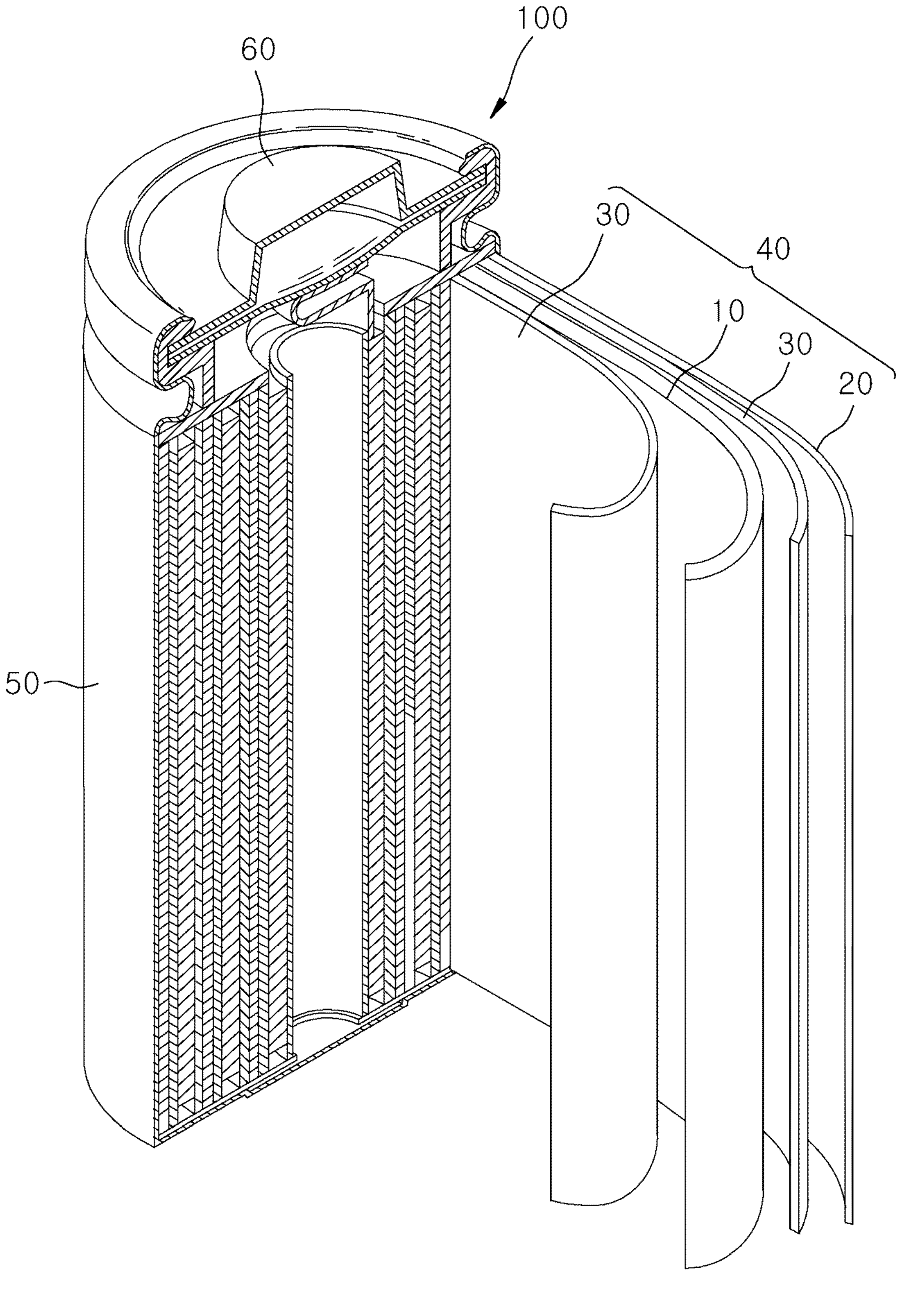

**FIG. 3**

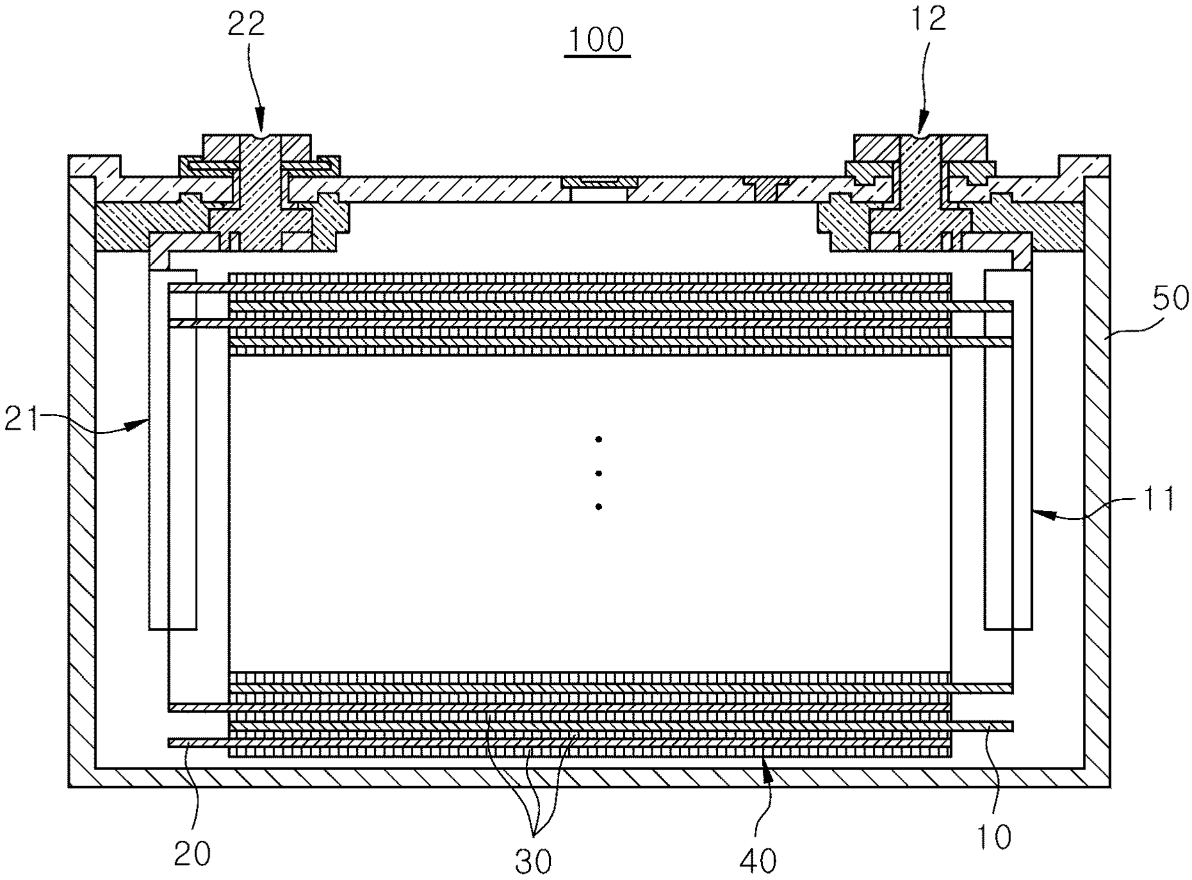

FIG. 4

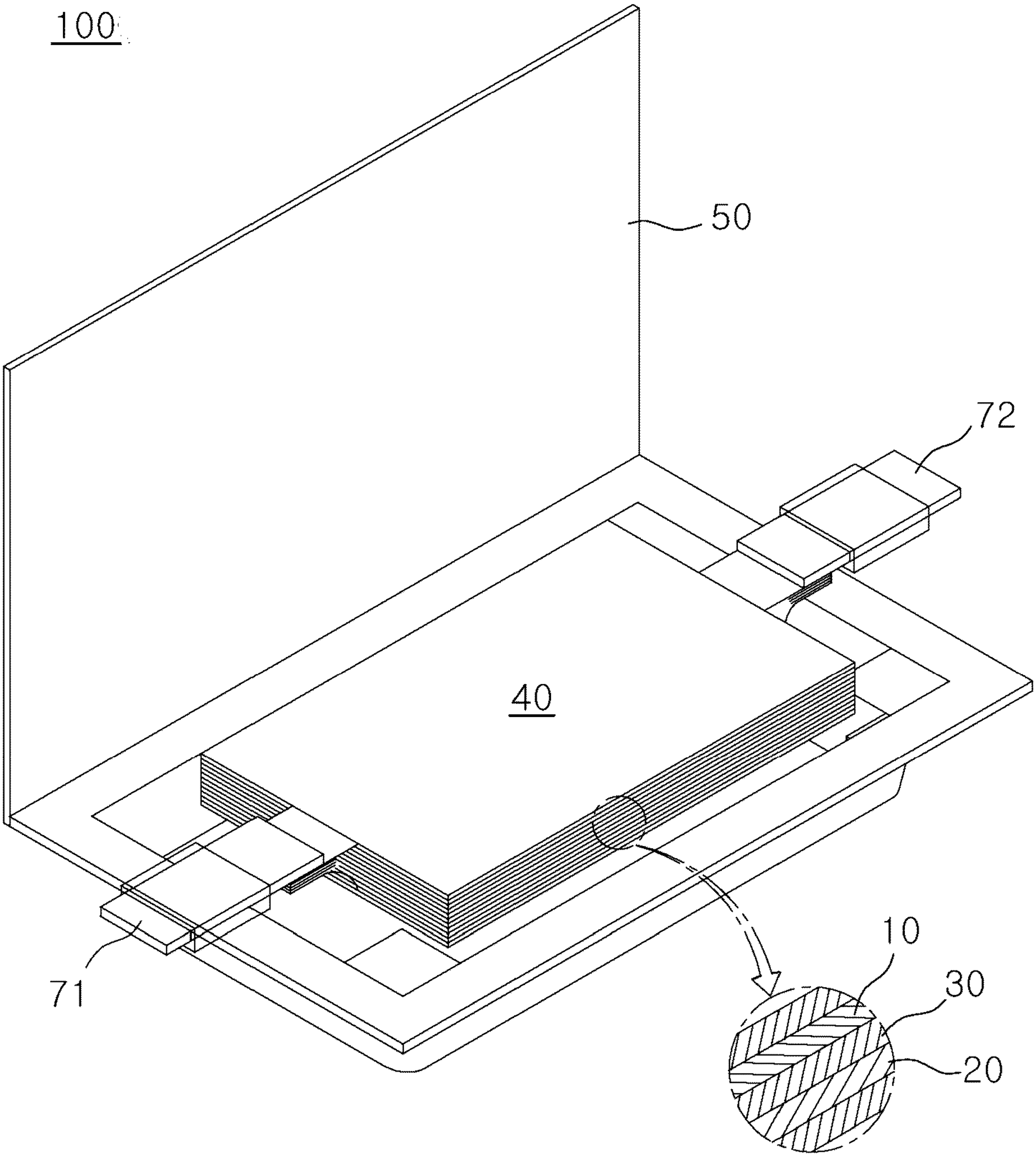

FIG. 5

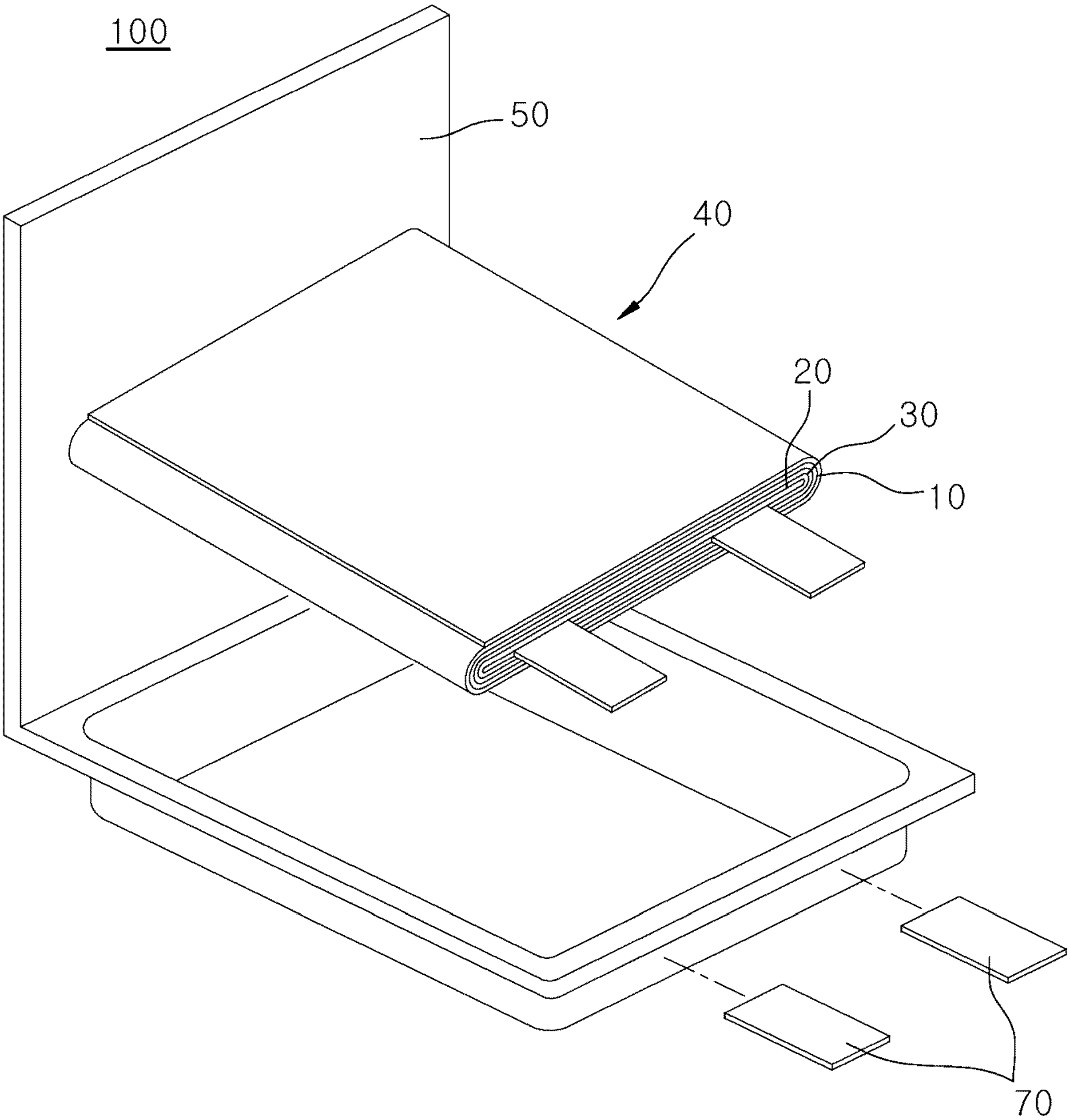

Europäisches Patentamt
European Patent Office
Office européen des brevets

# EUROPEAN SEARCH REPORT

Application Number
EP 25 17 0616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 246 969 A1 (SAMSUNG SDI CO LTD [KR]) 22 November 2017 (2017-11-22)<br>* paragraphs [0058] - [0064], [0098] - [0107], [0113]; claims 1-6, 12-15; table 2 * | 1-9, 11-14<br>10 | INV.<br>H01M50/451<br>H01M50/42<br>H01M50/446<br>H01M50/449<br>H01M50/489<br>H01M50/417<br>H01M50/434<br>H01M50/443 |
| A | CN 107 895 766 A (CHINA AVIATION LITHIUM BATTERY LUOYANG CO LTD) 10 April 2018 (2018-04-10)<br>* paragraphs [0008], [0014], [0030] * | 1-14 | |
| A | WO 2014/024991 A1 (ZEON CORP [JP]) 13 February 2014 (2014-02-13)<br>* page 26 - page 28 * | 1-14 | |

| TECHNICAL FIELDS SEARCHED (IPC) |
|---|
| H01M |

The present search report has been drawn up for all claims

1

| Place of search | Date of completion of the search | Examiner |
|---|---|---|
| The Hague | 15 August 2025 | Di Berardino, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 0616

This annex lists the patent family members relating to the patent documents cited in the above-mentioned European search report. The members are as contained in the European Patent Office EDP file on
The European Patent Office is in no way liable for these particulars which are merely given for the purpose of information.

15-08-2025

| Patent document cited in search report | | Publication date | Patent family member(s) | | | Publication date |
|---|---|---|---|---|---|---|
| EP 3246969 | A1 | 22-11-2017 | CN | 107394087 | A | 24-11-2017 |
| | | | CN | 108963148 | A | 07-12-2018 |
| | | | CN | 110651381 | A | 03-01-2020 |
| | | | EP | 3246969 | A1 | 22-11-2017 |
| | | | EP | 3627587 | A1 | 25-03-2020 |
| | | | JP | 6802392 | B2 | 16-12-2020 |
| | | | JP | 7097674 | B2 | 08-07-2022 |
| | | | JP | 2017208343 | A | 24-11-2017 |
| | | | JP | 2020521278 | A | 16-07-2020 |
| | | | KR | 20170129637 | A | 27-11-2017 |
| | | | KR | 20170129638 | A | 27-11-2017 |
| | | | KR | 20170129639 | A | 27-11-2017 |
| | | | KR | 20170129640 | A | 27-11-2017 |
| | | | KR | 20170129641 | A | 27-11-2017 |
| | | | KR | 20170129642 | A | 27-11-2017 |
| | | | KR | 20170129643 | A | 27-11-2017 |
| | | | KR | 20170129644 | A | 27-11-2017 |
| | | | KR | 20170129645 | A | 27-11-2017 |
| | | | US | 2017338461 | A1 | 23-11-2017 |
| | | | US | 2018337381 | A1 | 22-11-2018 |
| | | | US | 2020119323 | A1 | 16-04-2020 |
| | | | WO | 2018212566 | A1 | 22-11-2018 |
| CN 107895766 | A | 10-04-2018 | NONE | | | |
| WO 2014024991 | A1 | 13-02-2014 | JP | 6187464 | B2 | 30-08-2017 |
| | | | JP | WO2014024991 | A1 | 25-07-2016 |
| | | | KR | 20150043247 | A | 22-04-2015 |
| | | | WO | 2014024991 | A1 | 13-02-2014 |

EPO FORM P0459

For more details about this annex : see Official Journal of the European Patent Office, No. 12/82